# EUROPEAN PATENT SPECIFICATION

(11) **EP 1 763 969 B1**
(45) Date of publication and mention of the grant of the patent: **15.04.2009**
(21) Application number: 04740579.0
(22) Date of filing: 02.07.2004
(51) Int. Cl.: H04W 4/00, H04L 12/56, H04L 29/06

(54) **METHOD FOR SECURE HANDOVER**
VERFAHREN FÜR SICHERES HANDOVER
PROCEDE POUR TRANSFERT INTERCELLULAIRE SUR

(43) Date of publication of application: 21.03.2007
(73) Proprietor: NTT DoCoMo, Inc., Tokyo (JP)
(72) Inventor: SCHOO, Peter, 82194 Gröbenzell (DE)
(74) Representative: HOFFMANN EITLE
(86) International application number: PCT/EP2004/007223
(87) International publication number: WO 2006/002676

(56) References cited:
- WO-A-20/04047397
- US-B1- 6 370 380

## Description

### FIELD OF INVENTION

The present invention relates to a method of secure handover and related devices, in particular a method of operating an access point in a wireless communication environment for secure handover, a related access point, and a mobile terminal for executing handover between different access points.

### BACKGROUND ART

In a mobile communication environment, when a mobile terminal MT having established a communication session with an access point moves and becomes able to attach to a new access point AP, the new access point AP will require an authorization of the mobile terminal MT before accepting the handover.

Therefore, while moving a mobile terminal attached to the access point it reaches the coverage area of the new access point. If the new access point AP spans an overlapping coverage area, a handover is one solution to maintain seamless connectivity for the mobile terminal MT.

However, before a new access point AP accepts the handover thereto, an authorization of the mobile terminal MT is necessary. Such an authorization typically requires that the mobile terminal MT supports the authorization procedure by providing information. This information allows the new access point to validate identity and authorization credentials, both referred to as credentials, or handover secret in short in the following, of the mobile terminal MT. When the new access point successfully verifies this information, it accepts handover of the mobile terminal from the previous access point.

In view of the above, performance related to authorization, which in fact contributes to total latency of the handover process or the fraction of time, a mobile terminal MT actually lacks connectivity to any access point, depends on the effort for distributing credentials to mobile terminals, the use of credentials within handover procedures, and the verification of credentials at the access point whereto handover is executed.

Therefore, handover solutions according to prior art assume that credentials and/or handover secrets are generated at the old access point, used during the handover procedures, and, once the mobile terminal MT presents the credentials to the new access point, then the new access point will have access to the old access point for verification purposes. However, this leads to significant delay of handover procedure execution.

Yet another disadvantage of those solutions is that a mobile terminal is allowed during handover to be attached to the new access point, and only then the related handover credentials are verified. Considering the case that the verification process shows that the mobile terminal is not allowed to execute handover, significant signaling load between the mobile terminal and the new access point occurs without eventual handover of the mobile terminal to the new access point. In other words, the approach according to prior art leads to a waste of scarce radio resources for control signaling, should the mobile terminal not be authorized to execute handover. It should be noted that the above deficiencies occur irrespective of different fields of mobile communication environments, e.g., according to 802.1X, mobile IP/Seamoby, hierarchical mobile IP, fast mobile IP, and/or any other type of second and third mobile communication systems according to any type of communication standards.

Further, in WO 2004/047397 A2, there is described a method for secure 802.11 re-association without additional authentication, accounting, and authorization infrastructure. An access point authenticates itself with neighboring access points and establishes secure and mutually authenticated communication channels with its neighboring access points. When an access point learns of a neighboring access point, it initiates an authentication with an authentication server through the neighboring access point. Once access points have mutually authenticated each other, whenever a station authenticates itself with a first access point, the first access point communicates the station's authentication context information, e.g., session key and session identifier, to each neighboring access point.

Still further, in US-6,370,380 Bl, there is described a method for secure handover. In a mobile, wireless telecommunications network, communications relating to a mobile terminal can be protected during a handoff of the mobile terminal from a first access point to a second access point. This is accomplished by transmitting a security token from the first access point to the mobile terminal, and then from the mobile terminal to the second access point, over the radio interface. Thereafter, the security token is transmitted from the first access point to the second access point through a fixed network to which both the first and the second access points are connected. The communications link between the mobile terminal and the second access point needed to achieve secure handover is then established only if the second access point determines that the security token received from the mobile terminal matches the security token received from the first access point.

### SUMMARY OF INVENTION

In view of the above, the obj ect of the present invention is to provide a handover framework increasing performance efficiency while reducing software managerial effort, in particular for authorization security services in secure handover procedures.

As will be explained in the following, to achieve this object, the present invention relates to the operation structure of three operation subunits of the mobile communication environment, i.e. a mobile terminal for which secure handover is executed, a new access point to which secure handover is executed, and a previous access point to which the mobile terminal establishes a communication session prior to secure handover.

In more detail, the operation of the new access point in the wireless communication environment comprises the steps of claim 1.

Further, the operation at the previous access points supporting secure handover of a candidate mobile terminal to the new access point comprises the steps of claim 6.

Still further, the operation of the mobile terminal during secure handover from the previous access point to the new access point in the wireless communication environment comprises the steps of claim 11.

In view of the above, the present invention is based in the insight that the distribution and application of handover secrets involves closely related activities at a new access point, at the previous access point and at the mobile terminal executing secure handover. In particular, the present invention uses an approach which is fully opposite to the principles applied in the prior art in that it is the new access point that generates handover secrets and not the previous access point.

Yet another important advantage of delivery of handover secrets to the previous access point and related forwarding thereof to the mobile terminals is that according to the present invention, handover attempts are only accepted at the new access point from authorized mobile terminals, so as to avoid unnecessary control signaling load in the mobile communication environment.

Further solution properties of the invention are the applicability of existing security associations between access points, e.g., a plurality of previous access points and a new access point, the reduction of interactions/round trips of handover secrets for speed-up of handover procedure. Further, as the new access point verifies the handover secret that was produced by the new access point itself, the inventive secure handover framework is independent of the quality of secret, applicable to any type of L2/L3 combination and available in support of any services on higher layers of the OSI-model.

The reason for this is that the previous access point and the new access point know each other via the security association and that the previous access point has authorized the mobile terminal which authorization may be trusted by the new access point during re-authorization of the mobile terminal at the new access point during handover.

Further preferred embodiments of the present invention are related to the operation of the new access point.

In particular, according to a corresponding preferred embodiment, the generation and distribution of handover secrets is executed on the condition that the new access point accepts new secure handovers.

According to this preferred embodiment, it is possible to avoid unnecessary signaling traffic in the mobile communication network. In other words, e.g., should the new access point be already operated at the capacity limit, no further handovers thereto would be acceptable, so that related distribution of handover secrets is avoided at all. Therefore, not only traffic in the core network with respect to a handover would finally be rejected by the new access point. The same advantage also applies with respect to the signaling traffic between the previous access point and the mobile terminal and the mobile terminal and the new access point before rejection of the handover by the new access point.

According to yet another preferred embodiment being related to the operation of the new access point, it is suggested that the distributed handover secret is used for authorization of the mobile terminal for secure handover at the new access point.

Therefore, contrary to the prior art, the present invention suggests that the new access point generating the handover secret actually verifies the handover secret it has previously distributed so as to achieve local operation of the new access point for verification of handover secrets without interaction with other mobile communication network elements. This improves the time period used to verify handover secrets at the new access point.

Further, according to yet another preferred embodiment of operation of the new access point, it is suggested to generate handover secrets and distribute these handover secrets regularly and frequently, e.g., according to a predetermined handover secret generation timing.

As the new access point sends the handover secrets frequently to interested previous access points in its neighborhood, there may be achieved an improvement for the time period until a handover secret for the handover is available at the previous access points. Further, timestamps to prevent reply attacks are not required, as they are superseded by the regularly sent handover secrets.

In view of the above, with respect to the operation of the new access point, the present invention allows for an improvement of deployment of handover secret generation and handover secret verification software. Further, the operator of the new access point has full freedom to decide on how stringent the handover secret shall be. All this may be achieved by one and only one network element, i.e. the new access point, or in or close to the new access point.

Further preferred embodiments are related to the operation of previous access points.

According to a first such preferred embodiment, it is suggested that any previous access point executes an authorization at the new access point prior to handover. Upon successful authorization, preferably there follows a step of registration of the previous access point at the new access point for subsequent handover secret delivery.

The important advantage of this preferred embodiment is the establishment of trust between the previous access point and the new access point prior to actual execution of secure handover so as to achieve a further acceleration of handover authorization execution.

Another important advantage of this preferred embodiment, in particular in view of the registration of previous access points at the new access point, is that the operator of the new access point may decide on which type, category, or class of previous access points is willing to accept for execution of secure handover. This is of particular importance, should the secure handover be executed across different types of mobile communication environments or across boundaries of network communication environments run by different operators.

According to a further preferred embodiment of operation of previous access points, it is the previous access point which indicates secure handover. Alternatively, it may also be the mobile terminal which indicates secure handover.

In other words, advantageously according to the present invention, there is no restriction on which network element actually indicates handover, i.e. either the previous access point or mobile terminal, so that secure handover of the present invention may be applied to any type of network-assisted or mobile-assisted handover or any hybrid form thereof.

According to another preferred embodiment of the present invention there is provided a computer program product directly loadable into the internal memory of an access point of a mobile communication environment and/or mobile terminal comprising software code portions for performing the inventive method steps when the product is run on a processor of the access point and/or mobile terminal.

Therefore, the present invention is also provided to achieve an implementation of the inventive method steps on computer or processor systems. In conclusion, such implementation leads to the provision of computer program products for use with a computer system or more specifically a processor comprised in e.g., an access point of a mobile communication environment or a related mobile terminal.

This programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or Internet and/or telephone networks via modems or other interface devices. It should be understood that such media, when carrying processor readable instructions implementing the inventive concept represent alternate embodiments of the present invention.

### DESCRIPTION OF DRAWING

In the following, the best mode and preferred embodiments of the present invention will be described with respect to the drawing, in which:
- Fig. 1: shows a basic principle underlying the technical teaching of the present invention;
- Fig. 2: shows the operational context for secure handover of a mobile terminal between a previous access point and the new access point according to the present invention;
- Fig. 3: shows a schematic diagram of an access point according to the present invention;
- Fig. 4: shows a flowchart of operation for the access point shown in Fig. 3 operated as new access point;
- Fig. 5: shows a first flowchart of operation for the access point shown in Fig. 3 operated as previous access point;
- Fig. 6: shows a second flowchart of operation for the access point shown in Fig. 3 operated as previous access point;
- Fig. 7: shows a schematic diagram of the mobile terminal;
- Fig. 8: shows a first flowchart of operation for the mobile terminal shown in Fig. 7; and
- Fig. 9: shows a second flowchart of operation for the mobile terminal shown in Fig. 7.

### DESCRIPTION OF BEST MODE AND PREFERRED EMBODIMENTS

In the following, the best mode of operating the present invention and preferred embodiments thereof will be explained with reference to the drawing. Insofar as functionality according to the present invention is explained, it should be noted that this functionality may be implemented either in hardware and/or software and/or any combination thereof. Further, it should be noted that the present invention is applicable to any type of mobile communication environment wherein secure handover is applied, e.g., WLAN, mobile communication standards GSM, 3G mobile communication standards, mobile IP, etc.

In view of the above, access point in the sense of the present invention may be understood as any type of core network and radio network for establishment of the communication session between mobile terminals and the core network. Further, the handover secret or handover credential to be referred to in the following is to be understood as an item of information that is protected and used for authentication. The term 'handover secret' implies, e.g., symmetric and private keys and passwords, see IETF RFC 2828. Therefore, handover secret is any type of secret information, e.g., a token that the new access point expects to receive from a mobile terminal and that fulfils the requirements of the new access point for a mobile terminal authorization.

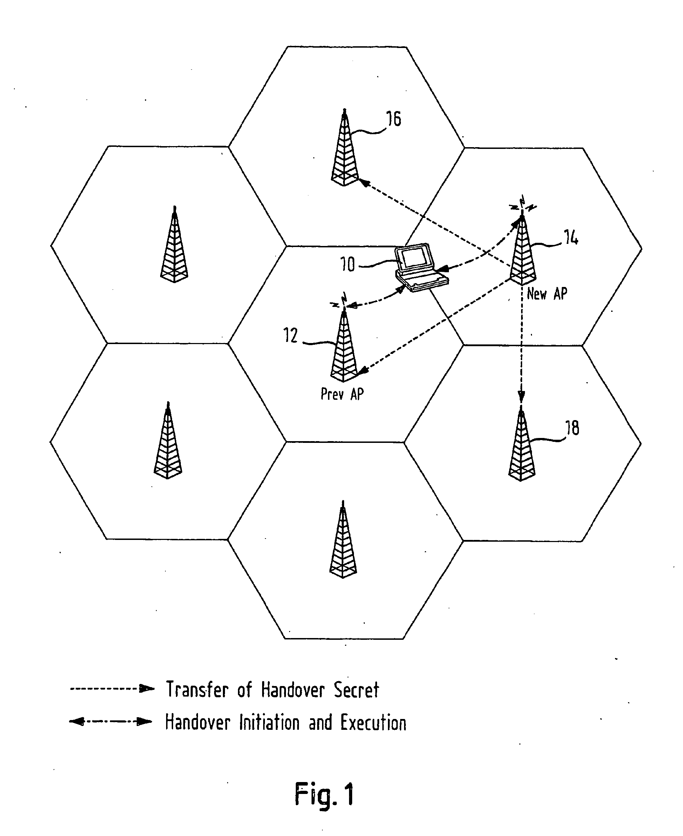

Fig. 1 shows the basic principle underlying the technical teachings of the present invention as outlined in the following.

As shown in Fig. 1, according to the present invention it is proposed to execute a secure handover for a mobile terminal from a previous access point 12 to a new access point 14 in that the new access point generates handover secret for secure handover and distributes the handover secrets to neighborhood access points 12, 16, 18, for forwarding thereof to the mobile terminal 10 prior to secure handover to the new access point 14. Therefore, the previous access point 12 receives the handover secret from the new access point 14 and forwards the handover secret to the mobile terminal having a communication session established with the previous access point 12 prior to secure handover. Then, the mobile terminal will forward the handover secret to the new access point 14 at the time of secure handover for mobile terminal authorization at the new access point through local operation at the new access point 14.

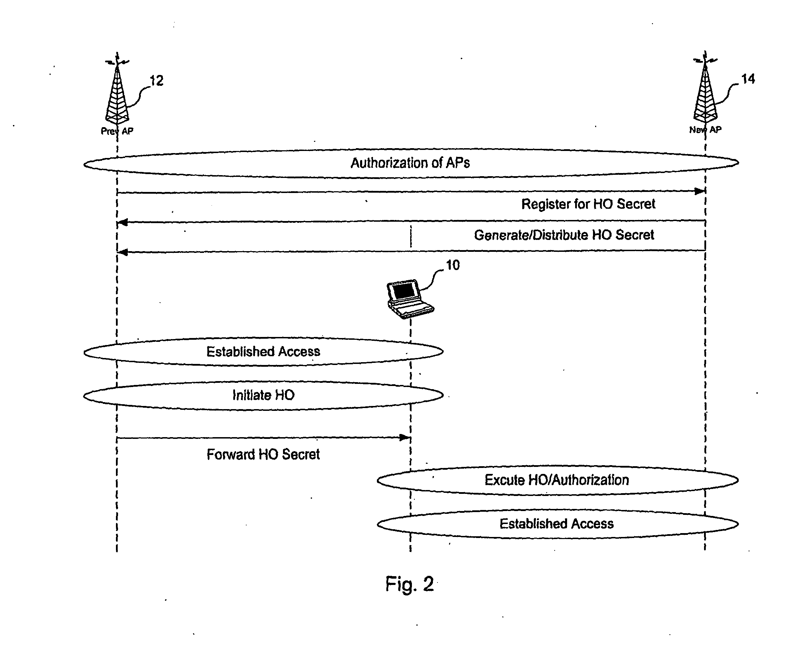

Fig. 2 shows the overall operational context for executing secure handover from a previous access point 12 to a new access point 14 for a mobile terminal 10.

As shown in Fig. 2, a first aspect of the operational context according to the present invention relates to the authorization of the previous access point 12 at the new access point 14. Therefore, the new access point 14 has the option to selectively admit different access points for execution of secure handover thereto according to the desires of the operator of the new access point.

As shown in Fig. 2, assuming that the previous access point 12 is authorized for handover to the new access point 14, what follows is registration of the previous access point 12 at the new access point 14 for delivery of handover secrets from the new access point 14 to the previous access point 12.

As shown in Fig. 2, such distribution of handover secrets may be executed frequently from the new access point 14 to the previous access point 12, e.g., according to a regular timing scheme, so that almost the most recent handover secret generated at the new access point 14 will be available at the previous access point 12.

As shown in Fig. 2, a further aspect of secure handover according to the present invention is related to interoperation between the previous access point 12 and the mobile terminal 10. Here, one may assume that there is established a communication session for access of the mobile terminal 10 at the previous access point. The establishment of such a communication session preferably requires an authorization of the mobile terminal 10 at the previous access point 12 for generation of trust between the previous access point 12 and the mobile terminal. The new access point 14 may then rely on the established trust between the previous access point 12 and the mobile terminal 10 for forwarding of handover secrets during execution of secure handover.

As shown in Fig. 2, subsequent to establishment of a communication session between the previous access point 12 and the mobile terminal 10, there may follow the initiation of a handover, either from the previous access point 12 or from the mobile terminal 10. This is the event that triggers the forwarding of a handover secret available at the previous access point 12 to the mobile terminal 10. On receipt of the handover secret, the mobile terminal 10 will then forward the received handover secret to the new access point 14 for subsequent authorization of the mobile terminal 10 at the new access point 14. Therefore, the new access point 14 will again receive the handover secret previously generated and distributed therefrom for local processing of the handover secret at the new access point. Then, after authorization, follows establishment of a communication link between the mobile terminal 10 and the new access point 14.

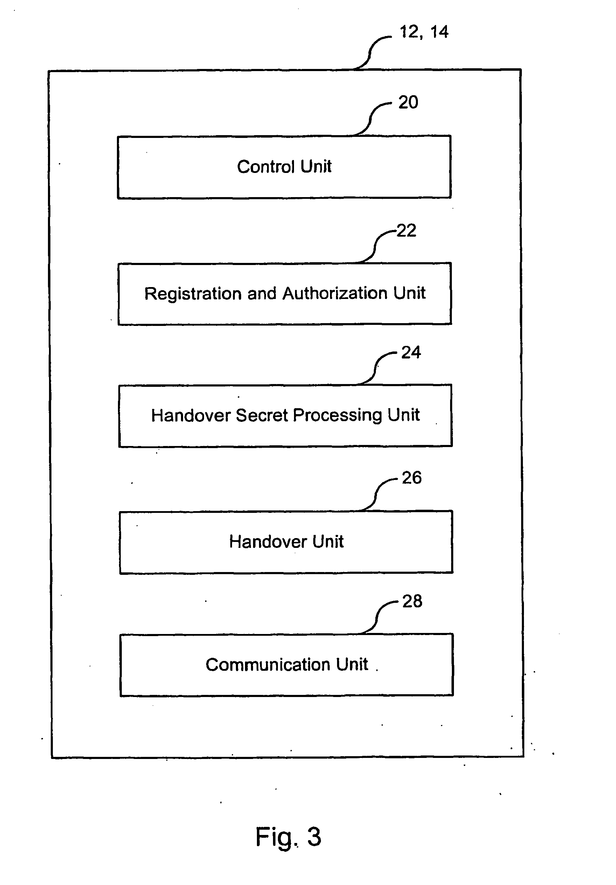

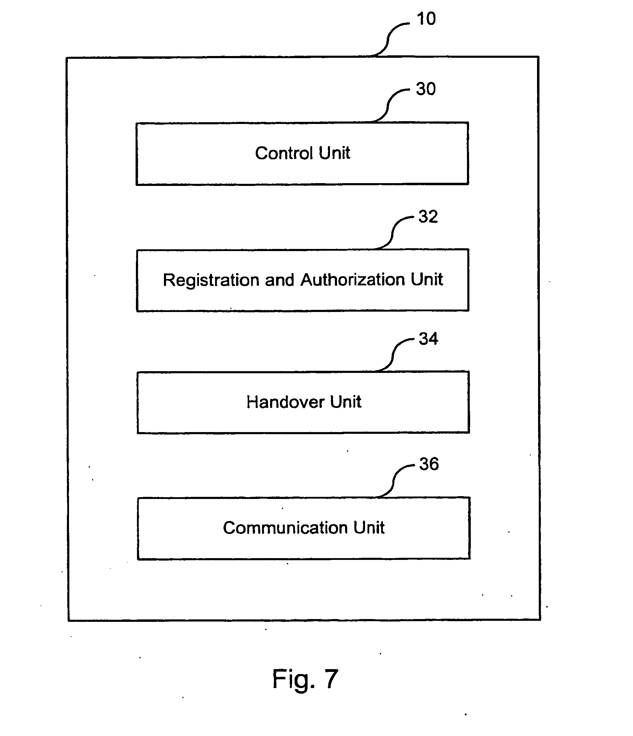

Further details of the present invention will be explained in the following with reference to Figs. 3 to 9. In particular, the explanations given with respect to Figs. 3 to 6 relate to the operation of access points, while the further Figs. 7 to 9 are related to the operation of a mobile terminal.

Fig. 3 shows a schematic diagram of an access point according to the present invention. The schematic diagram shown in Fig. 3 applies to both the structure of the previous access point 12 and a new access point 14, respectively.

As shown in Fig. 3, each access point comprises a control unit 20, a registration and authorization unit 22, a handover secret processing unit 24, a handover unit 26, and a communication unit 28.

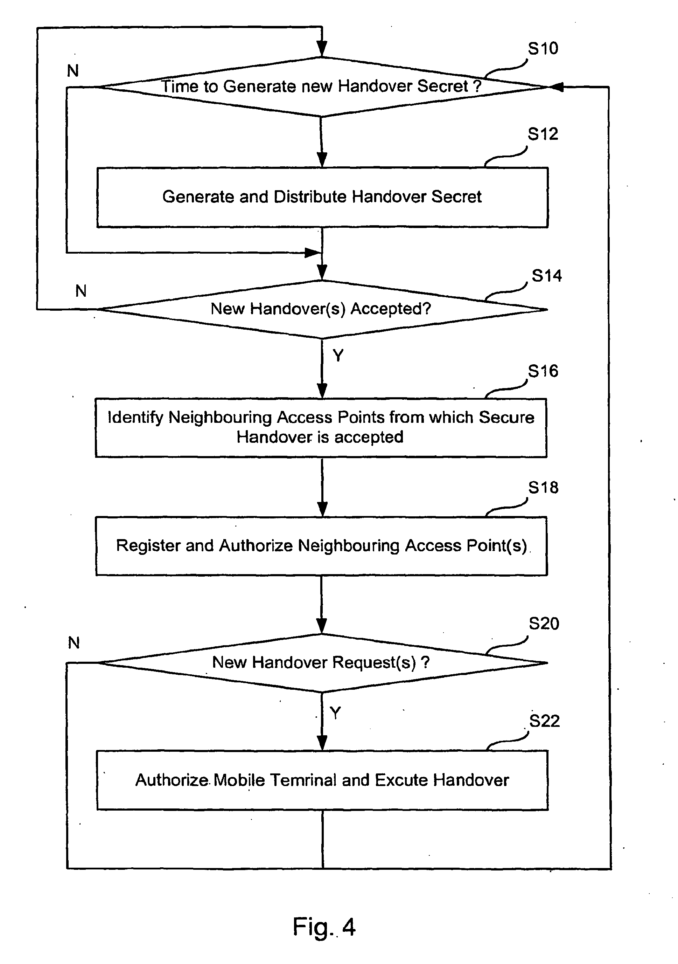

Fig. 4 shows a flowchart of operation for the new access point 14, wherein handover secrets are generated and executed according to a regular timing.

As shown in Fig. 4, operatively the handover secret processing unit 24 will continuously determine whether a time is given for generation of a new handover secret in a step S10 and generate and distribute a handover secret to neighboring access points in a step S12 accordingly.

As shown in Fig. 4, operatively the control unit 20 of the new access point 14 will determine whether new handovers are accepted at all in a step S14. If this is not the case, the procedure will branch back to step S10 for, e.g., periodic generation and distribution of handover secrets.

As shown in Fig. 4, if new handovers are accepted, the process proceeds to Step S16 to identify neighboring access points from which handovers are accepted. This step is executed by the registration and authorization unit 22 of the new access point 14. The registration and authorization unit 22 also executes registration of authorized neighboring access points at the new access point for secure handover in a step S18.

As shown in Fig. 4, operatively the handover unit 26 will evaluate submission of a new handover request from a mobile terminal in a step S20 and authorize the mobile terminal in a step S22. Upon successful authorization in step S22, there follows the actual execution of the handover for subsequent establishment of a communication session through operation of the communication unit 28.

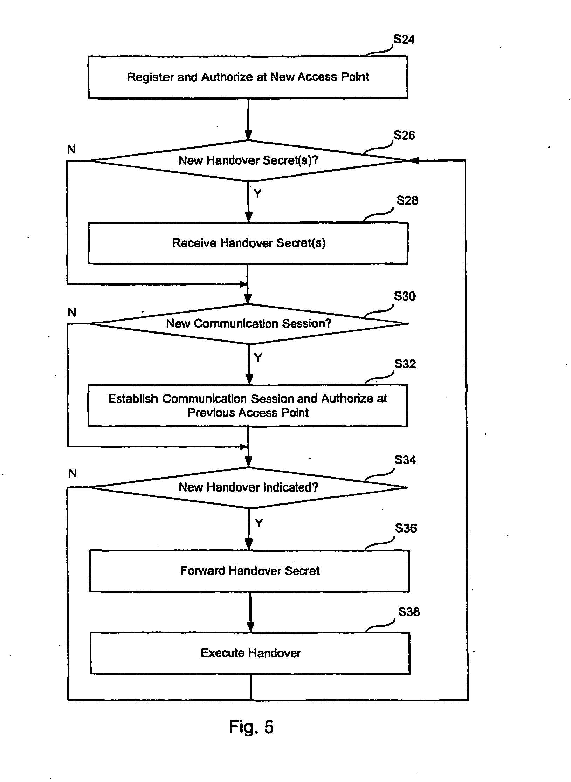

Fig. 5 shows a flowchart,of operation for the previous access point 12 shown in Figs. 1 and 2 in the event-driven mode, wherein a handover secret is forwarded to a mobile terminal on an indication of a handover.

As shown in Fig. 5, operatively in a step S24 the registration and authorization unit 22, now in the mode for operation as previous access point, will register and authorize the previous access point at the new access point.

As shown in Fig. 5, operatively the handover secret processing unit, in the mode for operating the previous access point, will continuously evaluate provision of new handover secrets according to step S26 and receive related handover secrets in a step S28, accordingly.

As shown in Fig. 5, at any time during operation of the previous access point the communication unit 28 is adapted to evaluate a request for establishment of a new communication session from a mobile terminal in a step S30 and for establishment of the new communication session upon successful authorization of the mobile terminal at the previous access point in a step S32. It should be understood that also step S30 and step S32 as shown in Fig. 5 are in relation to preceding and succeeding steps, that the establishment of a communication session may be achieved at any time, i.e. preceding the receipt of handover secrets also subsequent to forwarding of handover secrets to mobile stations that have pre-established a communication session.

As shown in Fig. 5, a further step of operation of the previous access point relates to evaluation of initiation of a new handover through the handover unit 26 in a step S34. Should a new handover be initiated, then in a step S36 the handover secret processing unit 24 will forward the current handover secrets to a mobile terminal for which a secure handover is executed. Subsequent thereto, the handover unit 26 will execute handover-related functionality in a step S38.

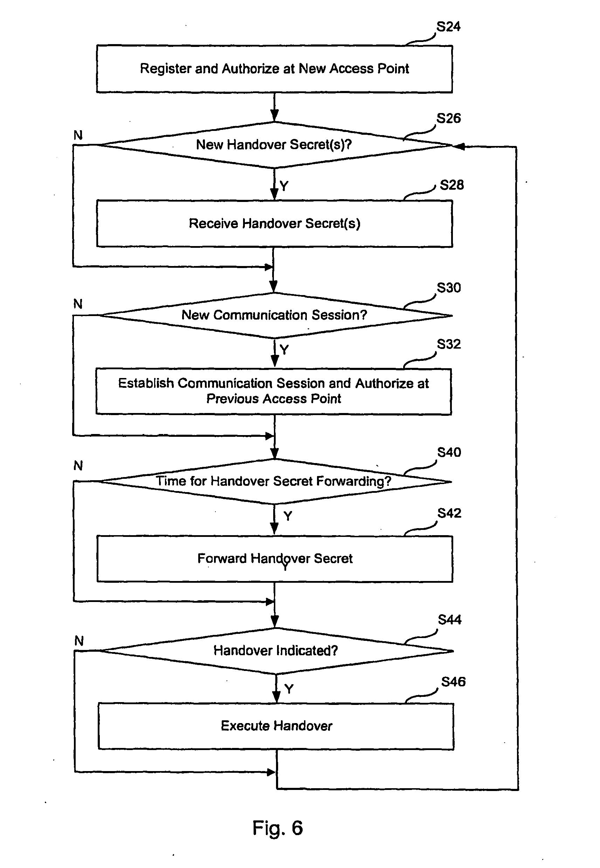

Fig. 6 shows a further flowchart of operation of the previous access point. While according to the flowchart shown in Fig. 5 the forwarding of a handover secret is event-driven, i.e. triggered by indication of a handover, according to the operation shown in Fig. 6, a handover is forwarded regularly independent of indication of a handover. Therefore, one may assume that a handover secret is immediately available at the mobile terminal for secure handover. This allows for accelerated handover at the cost of slightly increased signaling load for repeated forwarding of the handover secret.

As shown in Fig. 6, the steps S24 to S32 are similar to those explained with respect to Fig. 5 and will therefore not be explained again. The operation of the previous access point according to Fig. 6 is modified with respect to operation of the handover secret processing unit 24 and the handover unit 26.

As shown in Fig. 6, according to this modified operation of the previous access point, the handover secret processing unit will continuously evaluate the timing for forwarding of a handover secret according to a predetermined timing in step S40 and then forward the current handover secret in a step S42, accordingly. Therefore, forwarding of handover secrets is not triggered through handover application but determined according to a predetermined timing, e.g., a regular timing.

As shown in Fig. 6, the handover unit 26, upon indication of a handover in a step S44, will then immediately proceed to execution of handover in a step S46 assuming that the mobile terminal has been successfully authorized at the new access point. In other words, the handover unit 26 will immediately proceed to handover without waiting for forwarding of the handover secrets for an even more accelerated secure handover.

In the following, different aspects of operation of the mobile terminal for secure handover according to the present invention will be explained with respect to Fig. 7 to Fig. 9.

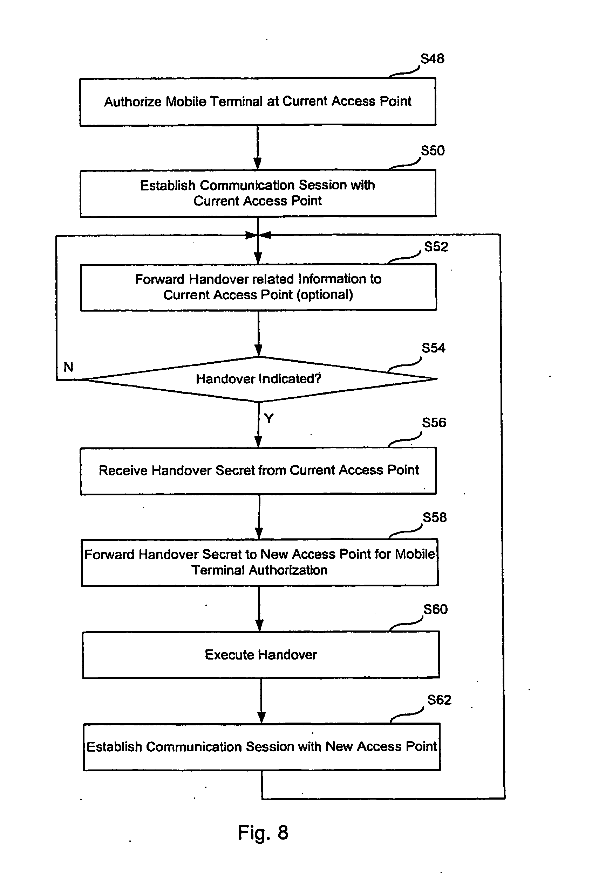

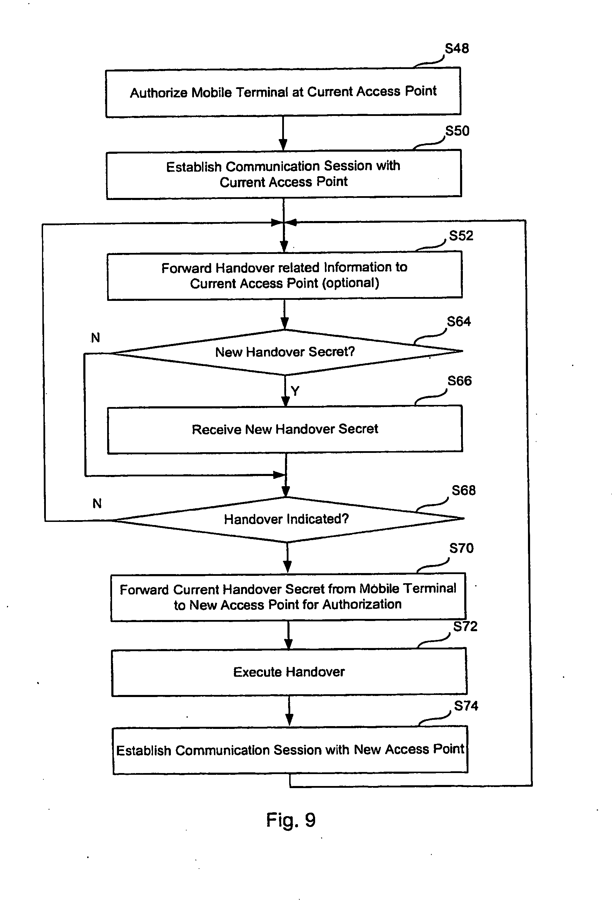

Fig. 7 shows a schematic diagram of the mobile terminal, and Fig. 8 and Fig. 9 show two flowcharts of operation for the mobile terminal according to the present invention.

As shown in Fig. 7, the mobile terminal, which may be any type of mobile terminal according to the present invention, e.g., a mobile telephone, a laptop computer, a PDA, a mobile organizer, an ICT device, comprises a control unit 30, an authorization unit 32, a handover unit 34, and a communication unit 36.

Fig. 8 shows a flowchart of operation of the mobile terminal as shown in Fig. 7.

As shown in Fig. 8, initially the authorization unit 32 will execute an authorization of a mobile terminal at the access point that is commonly supporting communication for the mobile terminal in a step S4B. Upon successful authorization, the communication unit will establish a communication session with the current access point in a step S50.

As shown in Fig. 8, during communication between the mobile terminal and the current access point, there may be executed a step S52 by the handover unit 34 for forwarding handover-related information to the current access point. This information may be related to determination whether a secure handover is to be executed or not. It should be noted that this step S52 is optional, as it may be omitted when determination and secure handover is determined exclusively, e.g., by the mobile terminal itself.

As shown in Fig. 8, what follows is an indication of a handover unit in a step S54 being executed by the handover unit 34. Upon such indication, the communication unit 36 will receive a handover secret from a current access point in a step S56. This received handover secret will then be used by the authorization unit 32 for authorization of the mobile terminal at the new access point in a step S58. Upon successful authorization in step S58, the handover unit 34 will then execute handover to the new access point in a step S60, followed by establishment of a communication session to the new access point through the communication unit 36 in a step S62. It should be noted that for the purpose of explanation of the mobile terminal subsequent to handover, the new access point will become the current access point for subsequent operation of the mobile terminal, as explained with respect to Fig. 8.

Fig. 8 shows the operation of the mobile terminal with forwarding of handover secrets to the mobile terminal in an event-driven manner, i.e. on indication of a handover. However, according to the present invention, also the.forwarding of handover secrets using a regular timing is covered, as will be explained in the following with respect to Fig. 9.

As shown in Fig. 9, the step of authorization of the mobile terminal S48 of establishing communication session, the step S50 in forwarding of handover-related information, and step S52 are similar to those explained with respect to Fig. 8 and will not be explained again. The operation according to Fig. 9 is different with respect to the reception of the handover secret by the authorization unit 32, which is not triggered by indication of a handover but through interrogation whether a new handover secret is forwarded to the mobile terminal in a step S64 and subsequent reception of the new handover secret in a step S66 upon affirmative interrogation in step S64.

As shown in Fig. 9, subsequent to step S66, the handover unit 34 will interrogate on indication of a handover in a step S68. In case no handover is indicated, the procedure will branch back to step S52. Otherwise, the authorization unit 32 will forward the current handover segment to the new access point in a step S70 for authorization of the mobile terminal at the new access point. Then, the handover unit 34 will execute handover in a step S72, followed by establishment of a communication session in a step S74 by the communication unit 36.

While above different embodiments and the best mode of operating the present invention has been described with reference to the drawing, it should be noted that the different aspects and functionalities described with respect to embodiments may easily be verified and modified by a person skilled in the art for achieving even further ways for implementing the present invention. Any such variation and modification is to be considered as well covered by the scope of the present invention as outlined in the appended claims.

## Claims

1. Method of operating a new access point (14) in a wireless communication environment for secure handover of a mobile terminal (10) to the new access point (14),
**characterized by** the steps:
generating at the new access point (S12) handover secrets for secure handover prior to secure handover of the mobile terminal to the new access point; and
distributing (S12) the handover secrets to neighborhood access points for forwarding to mobile terminals prior to secure handover to the new access point.

2. Method according to claim 1, **characterized in that** the step of generating (S12) handover secrets for secure handover is executed on the condition that the new access point accepts new secure handovers.

3. Method according to claim 1 or 2, **characterized in that** it comprises a step of authorizing (S22) a mobile terminal for secure handover to the new access point (14) using the distributed handover secrets.

4. Method according to one of the claims 1 to 3, **characterized in that** the step of generating (S12) handover secrets and the step of distributing (S12) the handover secrets to neighborhood access points are repeated according to a pre-determined handover secret generation timing (S10).

5. Method according to one of the claims 1 to 4, **characterized in that** it comprises a step of identifying (S16) neighborhood access points from which secure handovers are accepted.

6. Method of operating an old access point (12) in support of secure handover of a mobile terminal (10) to a new access point (14) in a wireless communication environment, comprising the steps:
- receiving (S28) handover secrets from the new access point (14) prior to secure handover of the mobile terminal (10) to the new access point (14); and
- forwarding (S36) the handover secrets to the mobile terminal (10) having a communication session established with the old access point (12) prior to secure handover of the mobile terminal (10) to the new access point (14).

7. Method according to claim 6, **characterized in that** it comprises a step of authorizing (S24) the old access point (12) at the new access point (14) for establishment of a security associations thereto.

8. Method according to claim 6 or 7, **characterized in that** the step of forwarding (S36) handover secrets is executed on indication (S34) of a secure handover through a mobile terminal (10).

9. Method according to claim 6 or 7, **characterized in that** it comprises a step of identifying a mobile terminal (10) which is a candidate for secure handover.

10. Method according to claim 9, **characterized in that** the step of forwarding (S36) handover secrets is executed to the mobile terminal (10) which is the candidate for secure handover.

11. Method of operating a mobile terminal (10) for secure handover from an old access point (12) to a new access point (14) in a wireless communication environment, wherein the new access point (14) generates handover secrets for secure handover and distributes the generated handover secrets to the old access point (12) prior to secure handover, comprising the steps:
- receiving (S56; S66) handover secrets prior to secure handover from the old access point (12) having a communication session established to the mobile terminal (10); and
- forwarding (S58; S76) the handover secrets to the new access point at the time of secure handover for mobile terminal authorization.

12. Method according to claim 11, **characterized in that** the step of authorizing the mobile terminal (10) at the new access point (14) is executed before establishment of the communication session.

13. Method according to claim 11, **characterized in that** the step of authorizing the mobile terminal (10) at the new access point is executed after establishment of the communication session.

14. Method according to one of the claims 12 or 13, **characterized in that** it comprises the step of authorizing the mobile terminal (10) for secure handover at the new access point uses received handover secrets.

15. Access point (14) in a wireless communication environment for secure handover of a mobile terminal from a previous access point (12) to the access point (14),
**characterized by**:
- a handover secret processing unit (24) adapted to generate handover secrets for secure handover prior to secure handover of the mobile terminal from the previous access point to the access point; and
- a communication unit (28) adapted to distribute the handover secrets to neighborhood access points for forwarding to mobile terminals prior to secure handover to the access point.

16. Access point according to claim 15, **characterized in that** the handover secret processing unit (24) is adapted to generate handover secrets for secure handover on the condition that the access point accepts new secure handovers.

17. Access point according to claim 15 or 16, **characterized in that** it comprises a registration and authorization unit (22) adapted to authorize a mobile terminal for secure handover to the access point using the distributed handover secrets.

18. Access point (12) for support of secure handover of a mobile terminal from the access point to a new access point (14) in a wireless communication environment, comprising:
- a handover secret processing unit (24) adapted to receive handover secrets generated at the new access point from the new access point prior to secure handover of the mobile terminal from the access point to the new access point; and
- a communication unit (28) adapted to forward the handover secrets to a mobile terminal having a communication session established with the access point prior to secure handover of the mobile terminal.

19. Access point according to claim 18, **characterized in that** it comprises a registration and authorization unit adapted to authorize the access point (22) at the new access point for establishment of a security associations thereto, wherein the new access point (14) generates handover secrets for secure handover and distributes the generated handover secrets to the old access point (12) prior to secure handover.

20. Mobile terminal (10) for secure handover from an old access point (12) to a new access point (14) in a wireless communication environment, wherein the new access point (14) generates handover secrets for secure handover and distributes the generated handover secrets to the old access point (12) prior to secure handover,
**characterized by**:
- a control unit (30) adapted to initiate reception of handover secrets prior to secure handover from the old access point having a communication session established to the mobile terminal; and
- a communication unit (36) adapted to forward the handover secrets to the new access point at the time of secure handover for mobile terminal authorization.

21. Computer program product directly loadable into the internal memory of an access point (12, 14) of a mobile communication environment comprising software code portions for performing the steps of one of the claims 1 to 10, when the product is run on a processor of the access point.

22. Computer program product directly loadable into the internal memory of a mobile terminal (10) comprising software code portions for performing the steps of one of the claims 11 to 14, when the product is run on a processor of the mobile terminal.

## Patentansprüche

1. Verfahren zum Betreiben eines neuen Zugangspunktes (14) in einer drahtlosen Kommunikationsumgebung für sicheres Handover eines mobilen Endgeräts (10) zu dem neuen Zugangspunkt (14),
**gekennzeichnet durch** die folgenden Schritte:
Erzeugen (S12) an dem neuen Zugangspunkt von Handover-Geheimnissen für sicheres Handover vor sicherem Handover des mobilen Endgeräts zu dem neuen Zugangspunkt; und
Verteilen (S12) der Handover-Geheimnisse zu Nachbarzugangspunkten zum Weiterleiten zu mobilen Endgeräten vor sicherem Handover zu dem neuen Zugangspunkt.

2. Verfahren nach Anspruch 1, **dadurch gekennzeichnet, dass** der Schritt zum Erzeugen (S12) von Handover-Geheimnissen für sicheres Handover bei der Bedingung ausgeführt wird, dass der neue Zugangspunkt neue sichere Handover akzeptiert.

3. Verfahren nach Anspruch 1 oder 2, **dadurch gekennzeichnet, dass** dieses einen Schritt (S22) des Autorisierens eines mobilen Endgeräts für sicheres Handover zu dem neuen Zugangspunkt (14) unter Verwendung der verteilten Handover-Geheimnisse umfasst.

4. Verfahren nach einem der Ansprüche 1 bis 3, **dadurch gekennzeichnet, dass** der Schritt des Erzeugens (S12) von Handover-Geheimnissen und der Schritt des Verteilens (S12) der Handover-Geheimnisse zu Nachbarzugangspunkten gemäß einer vorbestimmten Handover-Geheimnis-Erzeugungszeitsteuerung (S10) wiederholt werden.

5. Verfahren nach einem der Ansprüche 1 bis 4, **dadurch gekennzeichnet, dass** dieses einen Schritt zum Identifizieren (S16) von Nachbarzugangspunkten umfasst, von denen sichere Handover akzeptiert werden.

6. Verfahren zum Betreiben eines alten Zugangspunktes (12) zur Unterstützung von sicherem Handover eines mobilen Endgeräts (10) zu einem neuen Zugangspunkt (14) in einer drahtlosen Kommunikationsumgebung, die folgenden Schritte umfassend:
- Empfangen (S28) von Handover-Geheimnissen von dem neuen Zugangspunkt (14) vor sicherem Handover des mobilen Endgeräts (10) zu dem neuen Zugangspunkt (14); und
- Weiterleiten (S36) der Handover-Geheimnisse zu dem mobilen Endgerät (10), bei dem eine Kommunikationssitzung mit dem alten Zugangspunkt (12) eingerichtet ist, vor sicherem Handover des mobilen Endgeräts (10) zu dem neuen Zugangspunkt (14).

7. Verfahren nach Anspruch 6, **dadurch gekennzeichnet, dass** dieses einen Schritt zum Autorisieren (S24) des alten Zugangspunktes (12) an dem neuen Zugangspunkt (14) umfasst zum Einrichten von Sicherheitsassoziierungen dorthin.

8. Verfahren nach Anspruch 6 oder 7, **dadurch gekennzeichnet, dass** der Schritt zum Weiterleiten (S36) von Handover-Geheimnissen bei Anzeigen (S34) eines sicheren Handover durch ein mobiles Endgerät (10) ausgeführt wird.

9. Verfahren nach Anspruch 6 oder 7, **dadurch gekennzeichnet, dass** dieses einen Schritt zum Identifizieren eines mobilen Endgerätes (10) umfasst, das ein Kandidat für sicheres Handover ist.

10. Verfahren nach Anspruch 9, **dadurch gekennzeichnet, dass** der Schritt zum Weiterleiten (S36) von Handover-Geheimnissen bei dem mobilen Endgerät (10) ausgeführt wird, das der Kandidat für sicheres Handover ist.

11. Verfahren zum Betreiben eines mobilen Endgeräts (10) für sicheres Handover von einem alten Zugangspunkt (12) zu einem neuen Zugangspunkt (14) in einer drahtlosen Kommunikationsumgebung, wobei der neue Zugangspunkt (14) Handover-Geheimnisse für sicheres Handover erzeugt und die erzeugten Handover-Geheimnisse zu dem alten Zugangspunkt (12) verteilt vor sicherem Handover, die folgenden Schritte umfassend:
- Empfangen (S56; S66) von Handover-Geheimnissen vor sicherem Handover von dem alten Zugangspunkt (12), bei dem eine Kommunikationssitzung zu dem mobilen Endgerät (10) eingerichtet ist; und
- Weiterleiten (S58; S76) der Handover-Geheimnisse zu dem neuen Zugangspunkt zu der Zeit von sicherem Handover für mobile Endgerätautorisierung.

12. Verfahren nach Anspruch 11, **dadurch gekennzeichnet, dass** der Schritt zum Autorisieren des mobilen Endgeräts (10) bei dem neuen Zugangspunkt (14) ausgeführt wird vor Einrichten der Kommunikationssitzung.

13. Verfahren nach Anspruch 11, **dadurch gekennzeichnet, dass** der Schritt zum Autorisieren des mobilen Endgeräts (10) bei dem neuen Zugangspunkt (14) ausgeführt wird nach Einrichten der Kommunikationssitzung.

14. Verfahren nach einem der Ansprüche 12 oder 13, **dadurch gekennzeichnet, dass** dieses den Schritt zum Autorisieren des mobilen Endgeräts (10) für sicheres Handover an dem neuen Zugangspunkt unter Verwendung von empfangenen Handover-Geheimnissen umfasst.

15. Zugangspunkt (14) in einer drahtlosen Kommunikationsumgebung für sicheres Handover eines mobilen Endgeräts von einem vorherigen Zugangspunkt (12) zu dem Zugangspunkt (14),
**gekennzeichnet durch**:
- eine Handover-Geheimnis-Verarbeitungseinheit (24), die angepasst ist zum Erzeugen von Handover-Geheimnissen für sicheres Handover vor sicherem Handover des mobilen Endgeräts von dem vorherigen Zugangspunkt zu dem Zugangspunkt; und
- eine Kommunikationseinheit (28), die angepasst ist zum Verteilen der Handover-Geheimnisse zu Nachbarzugangspunkten zum Weiterleiten zu mobilen Endgeräten vor sicherem Handover zu dem Zugangspunkt.

16. Zugangspunkt nach Anspruch 15, **dadurch gekennzeichnet, dass** die Handover-Geheimnis-Verarbeitungseinheit (24) angepasst ist zum Erzeugen von Handover-Geheimnissen für sicheres Handover bei der Bedingung, dass der Zugangspunkt neue sichere Handover akzeptiert.

17. Zugangspunkt nach Anspruch 15 oder 16, **dadurch gekennzeichnet, dass** dieser eine Registrierungs- und Autorisierungseinheit (22) umfasst, die angepasst ist zum Autorisieren eines mobilen Endgeräts für sicheres Handover zu dem Zugangspunkt unter Verwendung der verteilten Handover-Geheimnisse.

18. Zugangspunkt (12) zur Unterstützung von sicherem Handover eines mobilen Endgeräts von dem Zugangspunkt zu einem neuen Zugangspunkt (14) in einer drahtlosen Kommunikationsumgebung, umfassend:
- eine Handover-Geheimnis-Verarbeitungseinheit (24), die angepasst ist zum Empfangen von Handover-Geheimnissen, die an dem neuen Zugangspunkt erzeugt werden, von dem neuen Zugangspunkt vor sicherem Handover des mobilen Endgeräts von dem Zugangspunkt zu dem neuen Zugangspunkt; und
- eine Kommunikationseinheit (28), die angepasst ist zum Weiterleiten der Handover-Geheimnisse zu einem mobilen Endgerät, bei dem eine Kommunikationssitzung mit dem Zugangspunkt etabliert ist, vor sicherem Handover des mobilen Endgeräts.

19. Zugangspunkt nach Anspruch 18, **dadurch gekennzeichnet, dass** dieser eine Registrierungs- und Autorisierungseinheit umfasst, die angepasst ist zum Autorisieren des Zugangspunkts (22) an dem neuen Zugangspunkt zum Etablieren einer Sicherheitsassoziierung dazu, wobei der neue Zugangspunkt (14) Handover-Geheimnisse für sicheren Handover erzeugt und die erzeugten Handover-Geheimnisse zu dem alten Zugangspunkt (12) vor sicherem Handover verteilt.

20. Mobiles Endgerät (10) für sicheres Handover von einem alten Zugangspunkt (12) zu einem neuen Zugangspunkt (14) in einer drahtlosen Kommunikationsumgebung, wobei der neuen Zugangspunkt (14) Handover-Geheimnisse für sicheres Handover erzeugt und die erzeugten Handover-Geheimnisse zu dem alten Zugangspunkt (12) vor sicherem Handover verteilt,
**gekennzeichnet durch**:
- eine Steuerungseinheit (30), die angepasst ist zum Initiieren von Empfang von Handover-Geheimnissen vor sicherem Handover von dem alten Zugangspunkt, bei dem eine Kommunikationssitzung zu dem mobilen Endgerät etabliert ist; und
- eine Kommunikationseinheit (36), die angepasst ist zum Weiterleiten der Handover-Geheimnisse zu dem neuen Zugangspunkt zu der Zeit von sicherem Handover für mobile Endgerätautorisierung.

21. Computerprogrammprodukt, das direkt in den internen Speicher eines Zugangspunktes (12, 14) von einer mobilen Kommunikationsumgebung geladen werden kann, umfassend Softwarecodeabschnitte zum Durchführen der Schritte eines der Ansprüche 1 bis 10, wenn das Produkt auf einem Prozessor des Zugangspunktes läuft.

22. Computerprogrammprodukt, das direkt in den internen Speicher eines mobilen Endgeräts (10) geladen werden kann, umfassend Softwarecodeabschnitte zum Durchführen der Schritte eines der Ansprüche 11 bis 14, wenn das Produkt auf einem Prozessor des mobilen Endgerätes läuft.

## Revendications

1. Procédé d'exploitation d'un nouveau point d'accès (14) dans un environnement de communication sans fil pour un transfert intercellulaire sécurisé d'un terminal mobile (10) vers le nouveau point d'accès (14), **caractérisé par** les étapes consistant à :
générer (S12) au nouveau point d'accès des secrets de transferts intercellulaires pour un transfert intercellulaire sécurisé avant le transfert intercellulaire sécurisé du terminal mobile vers le nouveau point d'accès ; et
distribuer (S12) les secrets de transferts intercellulaires à des points d'accès du voisinage pour un envoi vers des terminaux mobiles avant le transfert intercellulaire sécurisé vers le nouveau point d'accès.

2. Procédé selon la revendication 1, **caractérisé en ce que** l'étape de génération (S12) de secrets de transferts intercellulaires pour un transfert intercellulaire sécurisé est exécutée à la condition que le nouveau point d'accès accepte des nouveaux transferts intercellulaires sécurisés.

3. Procédé selon la revendication 1 ou 2, **caractérisé en ce qu'**il comprend une étape d'autorisation (S22) d'un terminal mobile pour un transfert intercellulaire sécurisé vers le nouveau point d'accès (14) utilisant les secrets distribués de transferts intercellulaires.

4. Procédé selon une des revendications 1 à 3, **caractérisé en ce que** l'étape de génération (S12) de secrets de transferts intercellulaires et l'étape de distribution (S12) des secrets de transferts intercellulaires vers des points d'accès du voisinage sont répétées selon un rythme prédéterminé (S10) de génération de secrets de transferts intercellulaires.

5. Procédé selon une des revendications 1 à 4, **caractérisé en ce qu'**il comprend une étape d'identification (S16) de points d'accès du voisinage à partir desquels sont acceptés des transferts intercellulaires sécurisés.

6. Procédé d'exploitation d'un ancien point d'accès (12) dans le support d'un transfert intercellulaire sécurisé d'un terminal mobile (10) vers un nouveau point d'accès (14) dans un environnement de communication sans fil, comprenant les étapes consistant à :
- recevoir (S28) des secrets de transferts intercellulaires en provenance du nouveau point d'accès (14) avant le transfert intercellulaire sécurisé du terminal mobile (10) vers le nouveau point d'accès (14) ; et
- envoyer (S36) les secrets de transferts intercellulaires vers le terminal mobile (10) ayant une session de communication établie avec l'ancien point d'accès (12) avant le transfert intercellulaire sécurisé du terminal mobile (10) vers le nouveau point d'accès.

7. Procédé selon la revendication 6, **caractérisé en ce qu'**il comprend une étape d'autorisation (S24) de l'ancien point d'accès (12) au nouveau point d'accès (14) pour l'établissement d'une association de sécurité à celui-ci.

8. Procédé selon la revendication 6 ou 7, **caractérisé en ce que** l'étape d'envoi (S36) de secrets de transferts intercellulaires est exécutée sur indication (S34) d'un transfert intercellulaire sécurisé par l'intermédiaire d'un terminal mobile (10).

9. Procédé selon la revendication 6 ou 7, **caractérisé en ce qu'**il comprend une étape d'identification d'un terminal mobile (10) qui est un candidat pour un transfert intercellulaire sécurisé.

10. Procédé selon la revendication 9, **caractérisé en ce que** l'étape d'envoi (S36) de secrets de transferts intercellulaires est exécutée vers le terminal mobile qui est le candidat pour le transfert intercellulaire sécurisé.

11. Procédé d'exploitation d'un terminal mobile (10) pour un transfert intercellulaire sécurisé depuis un ancien point d'accès (12) vers un nouveau point d'accès (14) dans un environnement de communication sans fil, dans lequel le nouveau point d'accès (14) génère des secrets de transferts intercellulaires pour un transfert intercellulaire sécurisé et distribue les secrets générés de transferts intercellulaires vers l'ancien point d'accès (12) avant le transfert intercellulaire sécurisé, comprenant les étapes consistant à :
- recevoir (S56 ; S66) des secrets de transferts intercellulaires avant le transfert intercellulaire sécurisé depuis l'ancien point d'accès (12) ayant une session de communication établie vers le terminal mobile (10) ; et
- envoyer (S58 ; S76) les secrets de transferts intercellulaires vers le nouveau point d'accès au moment du transfert intercellulaire sécurisé pour une autorisation du terminal mobile.

12. Procédé selon la revendication 11, **caractérisé en ce que** l'étape d'autorisation du terminal mobile (10) au nouveau point d'accès (14) est exécutée avant l'établissement de la session de communication.

13. Procédé selon la revendication 11, **caractérisé en ce que** l'étape d'autorisation du terminal mobile (10) au nouveau point d'accès est exécutée après l'établissement de la session de communication.

14. Procédé selon une des revendications 12 ou 13, **caractérisé en ce que** l'étape d'autorisation du terminal mobile (10) pour un transfert intercellulaire sécurisé au nouveau point d'accès utilise des secrets reçus de transferts intercellulaires.

15. Point d'accès (14) dans un environnement de communication sans fil pour un transfert intercellulaire sécurisé d'un terminal mobile depuis un point d'accès précédent (12) vers le point d'accès (14),
**caractérisé par** :
- une unité (24) de traitement de secrets de transferts intercellulaires adaptée pour générer des secrets de transferts intercellulaires pour un transfert intercellulaire sécurisé avant le transfert intercellulaire sécurisé du terminal mobile depuis le point d'accès précédent vers le point d'accès ; et
- une unité de communication (28) adaptée pour distribuer les secrets de transferts intercellulaires vers des points d'accès du voisinage pour un envoi vers des terminaux mobiles avant le transfert intercellulaire sécurisé vers le point d'accès.

16. Point d'accès selon la revendication 15, **caractérisé en ce que** l'unité (24) de traitement de secrets de transferts intercellulaires est adaptée pour générer des secrets de transferts intercellulaires pour un transfert intercellulaire sécurisé à la condition que le point d'accès accepte des nouveaux transferts intercellulaires sécurisés.

17. Point d'accès selon la revendication 15 ou 16, **caractérisé en ce qu'**il comprend une unité (22) d'enregistrement et d'autorisation adaptée pour autoriser un terminal mobile à un transfert intercellulaire sécurisé vers le point d'accès en utilisant les secrets distribués de transferts intercellulaires.

18. Point d'accès (12) pour le support d'un transfert intercellulaire sécurisé d'un terminal mobile depuis le point d'accès vers un nouveau point d'accès (14) dans un environnement de communication sans fil, comprenant :
- une unité (24) de traitement de secrets de transferts intercellulaires adaptée pour recevoir des secrets de transferts intercellulaires générés au nouveau point d'accès depuis le nouveau point d'accès avant le transfert intercellulaire sécurisé du terminal mobile depuis le point d'accès vers le nouveau point d'accès ; et
- une unité de communication (28) adaptée pour envoyer les secrets de transferts intercellulaires vers un terminal mobile ayant une session de communication établie avec le point d'accès avant le transfert intercellulaire sécurisé du terminal mobile.

19. Point d'accès selon la revendication 18, **caractérisé en ce qu'**il comprend une unité d'enregistrement et d'autorisation adaptée pour autoriser le point d'accès (22) au nouveau point d'accès pour l'établissement d'une association de sécurité à celui-ci, dans lequel le nouveau point d'accès (14) génère des secrets de transferts intercellulaires pour un transfert intercellulaire sécurisé et distribue les secrets générés de transferts intercellulaires vers l'ancien point d'accès (12) avant le transfert intercellulaire sécurisé.

20. Terminal mobile (10) pour un transfert intercellulaire sécurisé depuis un ancien point d'accès (12) vers un nouveau point d'accès (14) dans un environnement de communication sans fil, dans lequel le nouveau point d'accès (14) génère des secrets de transferts intercellulaires pour un transfert intercellulaire sécurisé et distribue les secrets générés de transferts intercellulaires vers l'ancien point d'accès (12) avant le transfert intercellulaire sécurisé, **caractérisé par** :
- une unité (30) de commande adaptée pour initialiser la réception de secrets de transferts intercellulaires avant un transfert intercellulaire sécurisé depuis l'ancien point d'accès ayant une session de communication établie vers le terminal mobile ; et
- une unité de communication (36) adaptée pour envoyer les secrets de transferts intercellulaires vers le nouveau point d'accès au moment d'un transfert intercellulaire sécurisé pour une autorisation du terminal mobile.

21. Produit programme d'ordinateur pouvant être directement chargé dans la mémoire interne d'un point d'accès (12, 14) d'un environnement de communication mobile comprenant des parties de codes d'un logiciel destiné à effectuer les étapes d'une des revendications 1 à 10, lorsque le produit est exécuté sur un processeur du point d'accès.

22. Produit programme d'ordinateur pouvant être directement chargé dans la mémoire interne d'un terminal mobile (10) comprenant des parties de codes d'un logiciel destiné à effectuer les étapes d'une des revendications 11 à 14, lorsque le produit est exécuté sur un processeur du terminal mobile.
